(19) **Europäisches Patentamt**
**European Patent Office**
**Office européen des brevets**

(11) **EP 2 164 201 B1**

(12) **EUROPEAN PATENT SPECIFICATION**

(45) Date of publication and mention
of the grant of the patent:
**30.10.2019 Bulletin 2019/44**

(51) Int Cl.:
*H04L 1/00* (2006.01)    *H04L 1/16* (2006.01)

(21) Application number: **09010833.3**

(22) Date of filing: **24.08.2009**

(54) **Technique for providing a physical uplink shared channel bitstream**

Verfahren zur Bereitstellung eines physisch gemeinsam benutzten Aufwärtskanal-Bitstroms

Technique pour la fourniture d'un train de bits de canal partagé de liaison physique ascendante

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **15.09.2008 US 96967 P
15.09.2008 US 96999 P**

(43) Date of publication of application:
**17.03.2010 Bulletin 2010/11**

(73) Proprietor: **Telefonaktiebolaget LM Ericsson
(publ)
164 83 Stockholm (SE)**

(72) Inventors:
• **Reinhardt, Steffen
90489 Nürnberg (DE)**
• **Gasiba, Tiago
90409 Nürnberg (DE)**

(74) Representative: **Ericsson
Patent Development
Torshamnsgatan 21-23
164 80 Stockholm (SE)**

(56) References cited:
**WO-A2-2008/057843**

• **AKIRA SHIBUTANI ET AL: "Multistage Recursive
Interleaver for Turbo Codes in DS-CDMA Mobile
Radio", IEEE TRANSACTIONS ON VEHICULAR
TECHNOLOGY, IEEE SERVICE CENTER,
PISCATAWAY, NJ, US, vol. 51, no. 1, 1 January
2002 (2002-01-01), XP011064354, ISSN:
0018-9545**
• **"3rd Generation Partnership Project; Technical
Specification Group Radio Access Network;
Evolved Universal Terrestrial Radio Access
(E-UTRA); Multiplexing and channel coding
(Release 8)", 3GPP STANDARD; 3GPP TS 36.212,
3RD GENERATION PARTNERSHIP PROJECT
(3GPP), MOBILE COMPETENCE CENTRE ; 650,
ROUTE DES LUCIOLES ; F-06921
SOPHIA-ANTIPOLIS CEDEX ; FRANCE, no.
V8.4.0, 1 September 2008 (2008-09-01), pages
1-56, XP050377550,**

**Description**

**Technical field**

The present invention generally relates to the technical field of uplink communication in a mobile communication network. In particular, the invention relates to a technique for providing a Physical Uplink Shared Channel (PUSCH) bitstream to be transmitted via an air interface in the uplink direction.

**Background**

Mobile communication networks working according to the Third Generation Partnership Project (3GPP) Long Term Evolution (LTE) standard use PUSCH in order to transmit user data, e.g., uplink user data traffic, control data, e.g. Channel Quality Indication (CQI) information and Preceding Matrix Indication (PMI) information, and downlink feedback information, e.g., ACK/NACK and Rank Indication (RI) information, between mobile stations and network nodes in the uplink direction. PUSCH is a specific channel of LTE systems as defined in 3GPP Release 8 and may, but does not have to contain the downlink feedback information. In particular, PUSCH is a common channel which can be used by different mobile stations. To reduce burst errors and to improve user data transmission via PUSCH, the user data is interleaved and thereafter scrambled. During both interleaving and subsequent scrambling, bits of the user data are rearranged. The interleaving rearranges the bits such that the user data is protected against burst errors, whereas the scrambling aims to whiten interference with other cells. Interleaving of user data is described in document 3GPP TS 36.212 V8 6.0 "Technical Specification Group Radio Access Network; Evolved Universal Terrestrial Radio Access (E-UTRA); Multiplexing and Channel Coding (Release 8)" and scrambling of user data is described in document 3GPP TS 36.211 V8.6.0 "Technical Specification Group Radio Access Network; Evolved Universal Terrestrial Radio Access (E-UTRA); Physical Channels and Modulation (Release 8)".

In order to avoid transmission errors, 3GPP LTE mobile communication networks use in the downlink and uplink direction a Hybrid Automatic Repeat Request (HARQ) backward error correction mechanism. For the HARQ backward error correction mechanism used in the downlink direction, successful reception of a sub-frame is acknowledged in the uplink direction by an indicator ACK. In case an error has been detected, a retransmission of a sub-frame is requested by an indicator NACK. The ACKinformation is transmitted via PUSCH in the uplink direction. The NACK information is only transmitted in case of simultaneous user data transmission via PUSCH in the uplink direction.

3GPP LTE mobile communication networks further use for the downlink communication Multiple-Input Multiple-Output (MIMO) communication systems. In order to indicate a number of transmission layers which can be received under current channel conditions for a respective downlink MIMO transmission scheme, RI information is transmitted in the uplink direction via PUSCH.

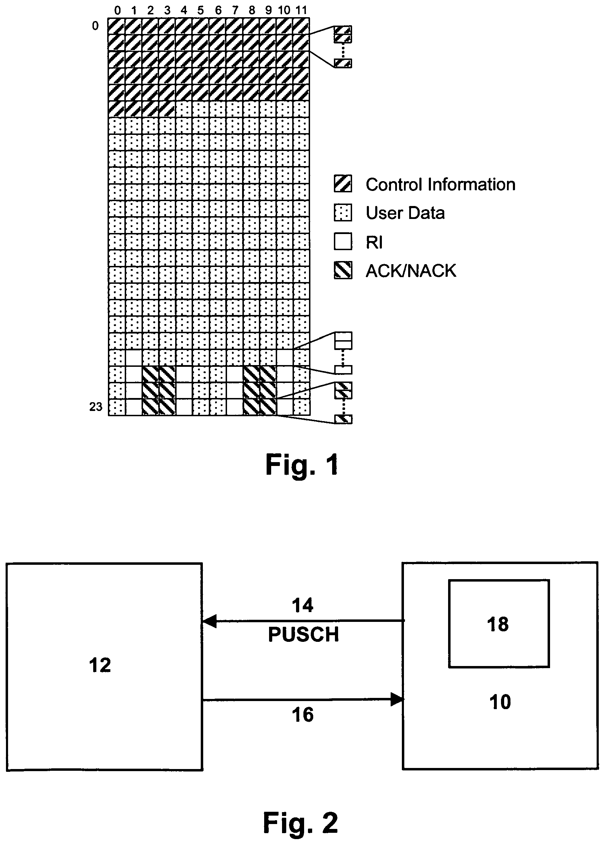

Document 3GPP TS 36.212 V8 6.0 discloses in section 5.2.2.8 "Channel Interleaver" an interleaving scheme in which ACK/NACK information and RI information are multiplexed in an interleaver matrix. The interleaving scheme is based on block interleaving comprising no row or column permutation and provides a time-first mapping of bits. A straightforward implementation of this interleaving scheme leads to the interleaver matrix shown in Fig. 1. The number of columns of the interleaver matrix is equal to the number of Single Carrier Frequency Division Multiple Access (SC-FDMA) symbols used in one sub-frame for PUSCH, i.e., 9, 10, 11 or 12. The number of rows of the interleaver matrix is equal to the number of resource elements scheduled for PUSCH, i.e., the number of resource blocks multiple 12. Each resource element carries one complex modulation symbol. Moreover, each matrix element consists of a vector. The length of the vectors depends on the used modulation scheme. For example, a two bit vector length is provided for Quadrature Phase Shift Keying (QPSK), a four bit vector length is provided for 16 Quadrature Amplitude Modulation (QAM), and a six bit vector length is provided for 64 QAM.

The interleaver matrix is filled with control information, user data, RI information and ACK/NACK information. After the RI Information is written into the interleaver matrix, user data is written into the interleaver matrix. Before the user data is interleaved, it is multiplexed by simple concatenation with CQI/PMI information. In order to interleave the user data, matrix elements occupied by RI information are skipped during the writing of the user data. Thereafter, ACK/NACK information is written into the interleaver matrix. The ACK/NACK information overwrites the user data and the CQI/PMI information. However, this filling of the interleaver matrix is time consuming and requires a relatively high amount of processing power, since during the interleaving of the user data, ACK/NACK and RI information has to be processed and written into the interleaver matrix. Accordingly, interleaving of user data may be delayed.

Moreover, since the interleaving of the user data is carried out at a relatively early point of time within the PUSCH bitstream generating process, not enough processing time for handling ACK/NACK and RI information may be available.

Thus, for providing a PUSCH bitstream, the problem of requiring a high amount of processing power arises.

WO 2008/057843 describes a method that may facilitate multiplexing of control information and data for common transmission in a localized FDM wireless communication system.

## Summary

Accordingly, there is a need for a technique for providing a PUSCH bitstream, which is avoiding at least some of the disadvantages outlined above.

This need is satisfied according to a first aspect by a method for providing a PUSCH bitstream comprising the steps of claim 1.

The PUSCH bitstream is a bitstream carrying user data and downlink feedback information. The PUSCH bitstream may be transmitted via an air interface of a mobile communication network working, for example, according to the 3GPP LTE standard in the uplink direction from a mobile station to a network node. The downlink feedback information may be any kind of feedback information transmitted in the uplink direction, in particular, information which is relating to a communication in the downlink direction. The downlink feedback information may be at least one of information relating to a sub-frame reception status of the encoded user data, e.g., ACK/NACK information, and information relating to a number of transmission layers to be received under current channel conditions, e.g., RI information.

By adding the downlink feedback information to the scrambled encoded user data (during the scrambling process and not during the preceding interleaving process), the interleaving can be released from a time consuming and processing power intensive handling of downlink feedback information. Furthermore, since the downlink feedback information is processed at a later point of time within the PUSCH bitstream generation process, more time for handling the downlink feedback information is provided.

To further simplify the interleaving of the encoded user data, the method may comprise the step of considering a parameter relating to an amount of RI information for the interleaving of the encoded user data. According to this aspect, only a number of positions to be reserved for RI information is considered during the interleaving. Therefore, multiplexing of RI information to determined destination addresses, i.e., writing of RI information into an interleaver matrix, can be avoided.

According to another aspect, the method may comprise the step of reserving positions for the RI information. Since the positions are only reserved, no multiplexing of RI information to determined destination addresses, i.e., writing of RI information into an interleaver matrix, has to be provided. Moreover, since the RI information is added to the scrambled encoded user data, information regarding how the RI information is to be processed during the scrambling does not have to be added during the interleaving. The RI information may only be one bit and may be encoded in a way that it requires several modulation symbols, i.e., up to 108 resource elements.Therefore, interleaving of encoded user data can be accelerated without an increase of processing power.

To further facilitate the interleaving of encoded user data, bit positions within the encoded user data which have been reserved for RI information may be determined based on a recursive algorithm. In particular, since the interleaving is simplified and no multiplexing of downlink feedback information is necessary, a one-cycle algorithm can be used. The determination of bit positions may be provided during the interleaving of the encoded user data.

To decrease the amount of processing power required for the interleaving of the encoded user data, the method may comprise the further step of calculating bit destination addresses of the obtained encoded user data, wherein the calculating of the destination addresses is only provided for bit positions within the encoded user data which have not been reserved for the RI information. Thereby, unnecessary calculations of destination addresses that cannot be filled with encoded user data is avoided.

The interleaved encoded user data may be stored based on the calculated bit destination addresses in an output offer. According to this aspect, interleaving of the encoded user data may be provided without multiplexing data elements in an interleaver matrix. In particular, for each input symbol, the address in the output buffer is directly calculated. Thereby, the symbol itself is not amended.. Thus, the processing speed of the encoded user data interleaving can be further improved.

To increase the processing time for handling control information, the method may comprise the further steps of obtaining encoded control information and interleaving the encoded control information after the interleaving of the encoded user data. Moreover, multiplexing of encoded user data and encoded control information may be combined with the interleaving. The encoded control information may relate to at least one of CQI information and PMI information.

The method may comprise the further step of rate-matching the obtained encoded user data. Thereby, the block sizes of the encoded user data can be adapted to given radio frames. In particular, bits may be repeated to increase the transmission rate or punctured to decrease the transmission rate.

To provide a predetermined encoded sequence length, the method may comprise the further step of repeatedly adding the downlink feedback information to the scrambled encoded user data.

According to a further aspect, the method may comprise the steps of encoding the downlink feedback information, adding the encoded downlink feedback information to the scrambled encoded user data, and post-processing the scrambled encoded user data.

According to another aspect, a computer program product is provided. The computer program product comprises program code portions for performing one or more of the steps or one or more of the method aspects described herein, when the computer program product is executed on one or more computing devices, in particular, one or more components of a baseband chipset. The computer program product may be stored on a computer-readable recording medium such as a permanent or re-writable memory, a CD-Rom, or a DVD. The computer program product may also be provided for download via one of more computer networks, such as the Internet, a cellular telecommunication network or a wireless or wired Local Area Network (LAN).

As for a first hardware aspect, an apparatus for providing a PUSCH bitstream is provided. The apparatus comprises the features of claim 9.

As for a second hardware aspect, a baseband chipset comprising the apparatus for providing a PUSCH bitstream is provided. Furthermore, as for a third hardware aspect, a mobile station comprising the baseband chipset is provided. The mobile station may be any mobile communication device like a mobile telephone, a Personal Digital Assistant (PDA), a network card, a User Equipment (UE) or any other mobile communication apparatus which is capable of communication via an air interface with a network node, e.g., an eNodeB or a base station being deployed in a mobile communication network working according to the 3GPP LTE standard.

**Brief description of the drawings**

In the following, the invention will be described with reference to exemplary embodiments illustrated in the drawings, wherein

Fig. 1    is a schematic block diagram showing an implementation of an interleaver matrix;

Fig. 2    is a schematic block diagram showing an embodiment of a mobile station communicating with a base station;

Fig. 3    is a schematic block diagram showing an embodiment of an apparatus for providing a PUSCH bitstream;

Fig. 4    is a flow chart showing an embodiment of a method for providing a PUSCH bitstream;

Fig. 5    is a schematic block diagram showing an embodiment of a buffer configuration;

Fig. 6    is a flow chart showing an embodiment of a method for interleaving control information;

Fig. 7    is a schematic block diagram showing a first embodiment of an interleaver matrix; and

Fig. 8    is a schematic block diagram showing a second embodiment of an inter-leaver matrix.

**Detailed description**

In the following, for purposes of explanation and not limitation, specific details are set forth, such as particular sequences of steps, components and configurations, in order to provide a thorough understanding of the present invention. It will be apparent to one skilled in the art that the present invention may be practiced in other embodiments that depart from these specific details. For example, while the embodiments will be described with reference to mobile stations and mobile communication networks which are operating according to the 3GPP LTE standard, it will be apparent to the skilled person that the invention can also be practiced in context with mobile stations and mobile communication networks which are working in accordance with other mobile communication standards.

Moreover, those skilled in the art will appreciate that the functions and processes explained herein below may be implemented using software functioning in conjunction with programmed microprocessors or general-purpose computers. It will also be appreciated that while the embodiments are primarily described in the form of methods and apparatuses, the invention may also be embodied in a computer program product as well as in a system comprising a computer processor and a memory coupled to the processor, wherein the memory is encoded with one or more programs that may perform the functions disclosed herein.

Fig. 2 shows a schematic block diagram illustrating an embodiment of a mobile station 10 communicating with a base station 12. Mobile station 10 and base station 12 are working in accordance with the 3GPP LTE standard. Communication signals are transmitted in the uplink direction 14 and the downlink direction 16. In particular, in the uplink direction 14, a PUSCH bitstream is transmitted. The mobile station 10 comprises an apparatus 18 for providing the PUSCH bitstream. Apparatus 18 can be realized as a baseband chipset.

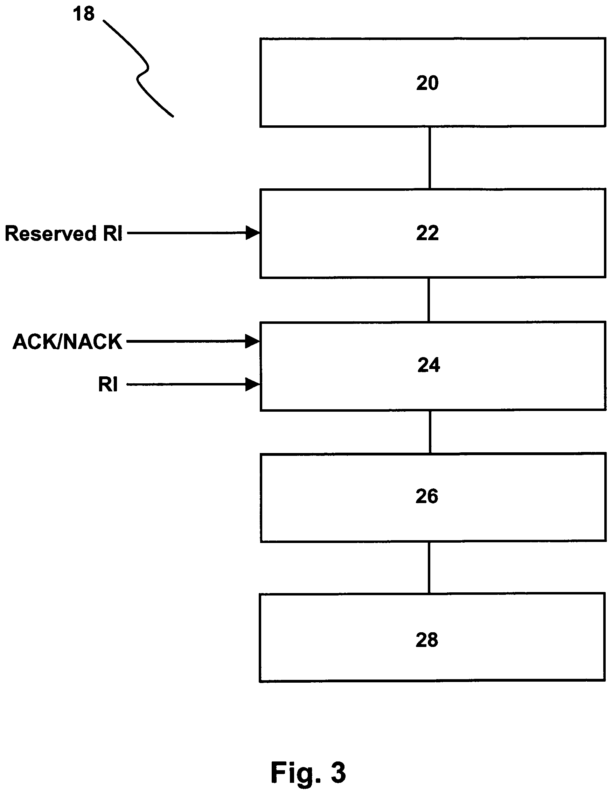

Fig. 3 shows a schematic block diagram illustrating an embodiment of the apparatus 18 for providing the PUSCH bitstream. Apparatus 18 may be included in the mobile station 10 of Fig. 2 and comprises a user data encoding unit 20, an interleaving unit 22, a scrambling unit 24, a processing unit 26, and an output buffer 28. The apparatus 18 may comprise further components not shown in Fig. 3.

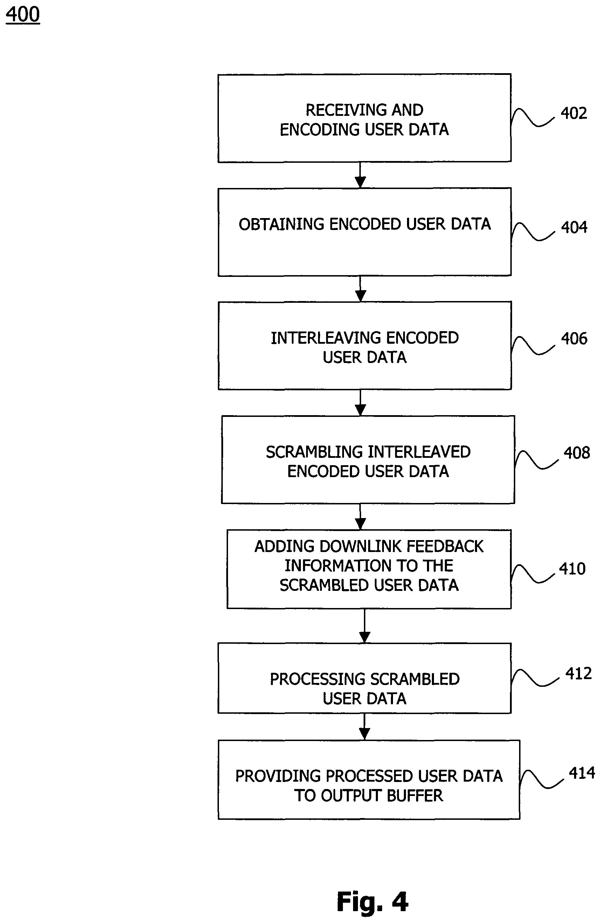

Fig. 4 shows a flow chart 400 illustrating an embodiment of a method for providing a PUSH bitstream. The method will be explained with reference to the apparatus 18 of Figs. 2 and 3.

The method 400 starts in step 402 in that the user data encoding unit 20 receives transport blocks comprising user data to be transmitted in the uplink direction 14. Furthermore, the user data is encoded in step 402. Thereafter, in step 404, the encoded user data is obtained by interleaving unit 22. The obtained encoded user data is interleaved in next step 406. For the interleaving of the encoded user data, only positions for RI information have to be reserved. For this, interleaving unit 22 only requires information regarding the number of RI positions to be reserved. In other words, during interleaving step 406 executed by interleaving unit 22, no insertion of ACK/NACK information or multiplexing of RI information is executed. Thereafter, the interleaved encoded user data is provided from interleaving unit 22 to scrambling unit 24.

In subsequent step 408, scrambling unit 24 scrambles the interleaved encoded user data. Thereafter, in step 410, the downlink feedback information (i.e., ACK/NACK and RI information) is added to the scrambled encoded user data. Accordingly, interleaving unit 22 is released from executing processing-intensive ACK/NACK insertion and RI multiplexing algorithms. Furthermore, since the ACK/NACK and RI information processing is provided within scrambling unit 24, more time for handling ACK/NACK and RI information is provided. After step 410, the scrambled encoded user data is provided to processing unit 26, which executes in step 412 multiple processing steps like modulation mapping, transform precoding, resource element mapping, and SC-FDMA signal generation. In final step 414, the processed user data is provided to output buffer 28.

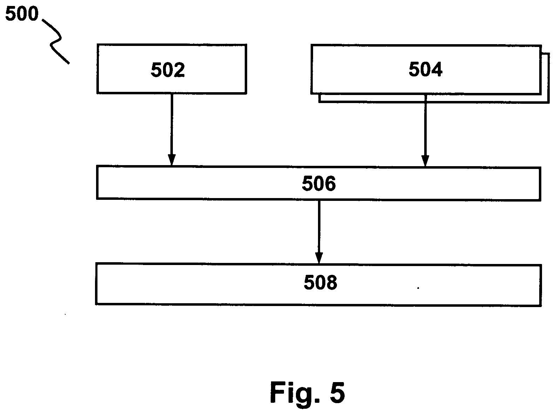

Fig. 5 shows a schematic block diagram illustrating an embodiment of a buffer configuration 500. The buffer configuration may be included in the apparatus 18 for providing a PUSCH bitstream of Figs. 2 and 3. Buffer configuration 500 comprises a control information buffer 502 for storing encoded control information (e.g., CQI/PMI information), an intermediate circular buffer 504 which may be embodied as a plurality of ping pong buffers (i.e., double buffers), a multiplexing and interleaving unit 506, and an output buffer 508. Output buffer 508 may be output buffer 28 of Fig. 3.

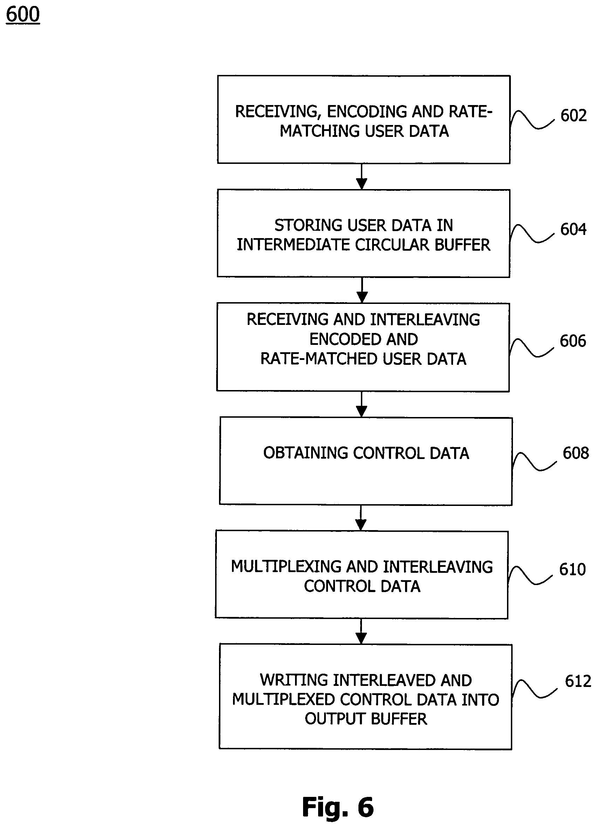

Fig. 6 shows a flow chart 600 illustrating an embodiment of a method for multiplexing and interleaving control information. The method will be explained with reference to the buffer configuration 500 of Fig. 5.

In a first step 602, code blocks comprising user data are received, encoded and rate-matched. Thereafter, in step 604, the encoded and rate-matched user data is stored in intermediate circular buffer 504. For example, a maximum of 18444 bits may be written into intermediate circular buffer 504. In subsequent step 606, the encoded and rate-matched user data is read from intermediate circular buffer 504 and interleaved. To accelerate the processing, the interleaving may be provided virtually, i.e., "on the fly", whereby no writing of data in an interleaver matrix is carried out. Thereafter, in step 608, encoded control information (e.g., CQI/PMI information) stored in control information buffer 502 is obtained. In step 610, multiplexing and interleaving unit 506 multiplexes and interleaves the encoded control information. According to this embodiment, the encoded and rate-matched user data is interleaved first and thereafter the control information is interleaved. Moreover, the multiplexing and interleaving is combined. Therefore, the processing time for handling control information can be decreased. In final step 612, the multiplexed and interleaved data is written into output buffer 508. For example, a maximum of 86400 bits may be written into output buffer 508.

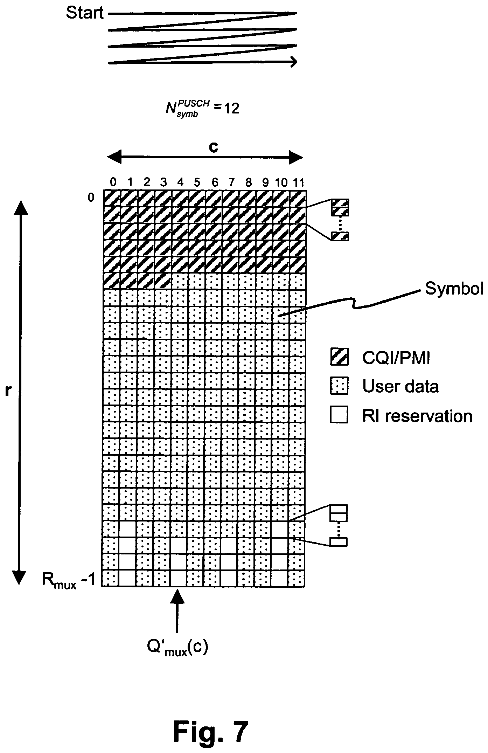

Fig. 7 shows a schematic block diagram illustrating a first embodiment of an interleaver matrix. The interleaver matrix comprises c = 12 columns and r = 24 rows. Each matrix element corresponds to one symbol. The interleaver matrix is based on a recursive algorithm filled with encoded CQI/PMI information, encoded user data and RI information reservation symbols. Interleaving unit 22 of Fig. 3 may execute the recursive algorithm.

When filling the encoded user data and the encoded CQI/PMI information into the interleaver matrix, positions reserved for RI information are skipped. Symbols reserved for RI information have a maximum bit-length of one bit. Since only a reservation is provided, arbitrary content may be used for the reserved symbols. Moreover, it is not necessary to include indicators which are requesting a special processing of RI information during the subsequent scrambling. For example, no information (e.g., x or y indicators) that the RI information is to be processed during the scrambling in a special way in order to maximize the Euclidean distance of the modulation symbols carrying the RI information has to be added during the interleaving. Since such indicators (e.g., x or y indicators) would require more than one bit, interleaving processing can be further accelerated. In a similar way, no indications have to be provided for ACK/NACK information.

The recursive algorithm calculates for given input symbols destination positions within an output buffer (e.g., output buffer 28 of Fig. 3). As indicated by the arrow having a zigzag shape in the upper portion of Fig. 7, the recursive algorithm is initialized with an input symbol at the upper left position of the interleaver matrix. This symbol represents a first input symbol as well as a first output symbol. In each recursion step of the recursive algorithm, the algorithm goes through the interleaver matrix row by row from left to right and checks whether a symbol is reserved for RI information. Reserved symbol positions may, e.g., be indicated by an address "-1". The checking for reserved symbol positions may be realized by computing within the interleaver matrix a row number r in which a symbol is provided. The recursive algorithm determines that the symbol is reserved if the row number r is within a reserved row and the column number c belongs to a given set, i.e. the condition

$$c \in ColSet_{RI} \text{ and } R_{mux} - 1 - r < Q'_c(c)$$

is fulfilled, wherein $ColSet_{RI}$ is the column set in the interleaver matrix used for RI, as defined in the 3GPP standard, $R_{mux}$ is the number of vector rows of the interleaver matrix, and $Q'_c(c)$ is the number of rows reserved for RI in a specific column c.

If the symbol is a data symbol (and not a symbol reserved for RI information), the recursive algorithm calculates the position within the output buffer. Therefore, a simple one cycle recursive algorithm is provided.

In the following, an embodiment of the recursive interleaving algorithm is explained. The recursive interleaving algorithm has the following input values:

$$N_{UL}^{PUSCH} \in \{9,10,11,12\}: \text{ The number of SC-FDMA symbols used for PUSCH.}$$

H": The number of complex modulation symbols used for PUSCH.

The recursive algorithm has the following output value:

a: A symbol based destination address in an output buffer.

The initialization of the recursive algorithm is provided as follows:

$$P = \begin{pmatrix} 0 & 0 & 0 & 0 \\ 1 & 0 & 0 & 0 \\ 1 & 0 & 0 & 1 \\ 1 & 0 & 1 & 1 \end{pmatrix}$$

$$ColSet = \begin{cases} \{0,3,5,8\} & N_{UL}^{PUSCH} \in \{9,10\} \\ \{1,4,7,10\} & N_{UL}^{PUSCH} \in \{11,12\} \end{cases}$$

$$C_{mux} = N_{UL}^{PUSCH}; \quad R_{mux} = H''/C_{mux}$$

$$Q'_c(c) = \begin{cases} \lfloor Q'_{RI}/4 \rfloor + P\langle c, Q'_{RI} \bmod 4 \rangle & c \in ColSet \\ 0 & else \end{cases} \quad c = 0,1,...,C_{mux}$$

r=0; c=0; a=0; j=0;

$N_{symb}^{PUSCH}$        Number of SC-FDMA symbols used for PUSCH in the current subframe

$ColSet_{RI}$        Column set in the interleaver matrix used for RI, as defined in the 3GPP standard

$Q'_{RI}$        Number of resource elements used for RI

H"        Number of resource elements used for PUSCH transmission

The algorithm recursion is provided as follows:

$$c = c + 1; \quad j = j + R'_{mux}$$

if $c > C_{mux} - 1$

$$c = 0; \quad r = r + 1; \quad j = 0$$

end if

if $R'_{mux} - r - 1 < Q'_c(c)$

$$a = -1$$

else

$$a = j + r$$

end

The recursive algorithm can be embodied based a load-on-demand and a buffering strategy. In the load-on-demand embodiment, encoded user data is obtained from an intermediate buffer (e.g., intermediate circular buffer 504 of Fig. 5) if the recursive algorithm outputs a valid destination address (i.e., a destination address that is not reserved for RI information). In this case, a user data symbol is stored at the calculated destination address in an output buffer (e.g., output buffer 28 of Fig. 3 or output buffer 508 of Fig. 5). Accordingly, there are recursion cycles in which no obtaining and storing of encoded user data is provided.

For the buffering embodiment, in each recursion cycle, a user data symbol is stored in a First In-First Out (FIFO) buffer. If the recursive algorithm outputs a valid destination address (i.e., a destination address that is not reserved for RI information), a user data symbol is loaded from the FIFO buffer and stored based on the calculated address in the output buffer (e.g., output buffer 28 of Fig. 3 or output buffer 508 of Fig. 5). The buffering embodiment can be used if the encoded user data symbols are to be virtually processed, i.e., "on the fly", without using an intermediate buffer or if in each recursion cycle, an encoded user data symbol is to be obtained from the intermediate buffer (e.g., intermediate circular buffer 504 of Fig. 5). The FIFO buffer is provided with a sufficient memory capacity to store the received encoded user data symbols.

As explained with regard to Figs. 5 and 6, the processing time for encoded control information, i.e., CQI/PMI information, can be increased by first processing the encoded user data symbols and thereafter processing the encoded control data symbols, e.g., the symbols carrying CQI/PMI information. To process the encoded user data symbols first, a "warm-up" of the recursive algorithm is provided. For this warm-up, the recursive algorithm is initialized as described above and thereafter, a predetermined number of recursions is executed before the processing of the encoded user data symbols starts. In particular, the warm-up of the recursive algorithm can be provided during an encoding of the first code block. An embodiment of a warm-up algorithm for the recursive algorithm is shown in the following. In this embodiment, x is the number of CQI/PMI symbols and a is the number of algorithm recursions.

```
Algorithm Initialization (...);
While (x > 0)
        a = {do one loop over the algorithm above}
        if a >= 0
               x = x -1
        end if
end while
```

In the following, an embodiment of a scrambling algorithm for scrambling interleaved encoded user data is explained. The scrambling algorithm may e.g. be executed by scrambling unit 24 of Fig. 3.

For the scrambling algorithm, the matrix

$$P = \begin{pmatrix} 0 & 0 & 0 & 0 \\ 1 & 0 & 0 & 0 \\ 1 & 0 & 0 & 1 \\ 1 & 0 & 1 & 1 \end{pmatrix}$$

and the offset vector b = (0 0 2 1) are used.

The scrambling algorithm is embodied as follows:

$$M_{bit,s} = M_{bit} / N_{symb}^{PUSCH}$$

$$j_{ACK} = 0; j_{RI} = 0$$

$$\text{for } k = 0 \text{ to } N_{symb}^{PUSCH} - 1$$

$$\quad \text{if } k == ColSet_{Ack}(j_{ACK})$$

$$\qquad N_c = \lfloor Q'_{ACK} / 4 \rfloor + P\langle Q'_{ACK} \bmod 4, j \rangle$$

$$\qquad ind = ACK$$

$$\qquad j_{ACK} = j_{ACK} + 1$$

$$\quad \text{else if } k == ColSet_{RI}(j_{RI})$$

$$\qquad N_c = \lfloor Q'_{RI} / 4 \rfloor + P\langle Q'_{RI} \bmod 4, j_{RI} \rangle$$

$$\qquad ind = RI$$

$$\qquad j_{RI} = j_{RI} + 1$$

$$\quad \text{else}$$

$$\qquad N_c = 0$$

$$\quad \text{end if}$$

$$\text{for } i = 0 \text{ to } M_{bit,s} - N_c \cdot Q_m - 1$$

$$\qquad \tilde{b}(k \cdot M_{bit,s} + i) = [b(k \cdot M_{bit,s} + i) + c(k \cdot M_{bit,s} + i)] \bmod 2$$

$$\text{end}$$

$$s = \left(b\langle j_{ind}\rangle + N_c\right) \bmod N_{q,ind}$$

$$i = M_{bit,s} - N_c \cdot Q_m$$

for $i = M_{bit,s} - N_c \cdot Q_m$ to $M_{bit,s} - 1$

switch $i \bmod Q_m$

case 0

$$s = (s-1) \bmod N_{q,ind}$$

$$\tilde{b}(k \cdot M_{bit,s} + i) = \left[p_{ind}(s \cdot Q_m) + c(k \cdot M_{bit,s} + i)\right] \bmod 2$$

case 1

if $m_{ind} == 2$

$$\tilde{b}(k \cdot M_{bit,s} + i) = \left[p_{ind}(s \cdot Q_m + 1) + c(k \cdot M_{bit,s} + i)\right] \bmod 2$$

else

$$\tilde{b}(k \cdot M_{bit,s} + i) = \tilde{b}(k \cdot M_{bit,s} + i - 1)$$

end

otherwise

$$\tilde{b}(k \cdot M_{bit,s} + i) = 1$$

end

end for

The following parameters are used in the in the algorithm:

$N_{symb}^{PUSCH}$        Number of SC-FDMA symbols used for PUSCH in the current subframe

$M_{bit}$       Number of bits transmitted on PUSCH for the current subframe

$Q_m$       Number of bits per complex modulation symbol (QPSK=2, 16QAM=4, 64QAM =6)

$ColSet_{RI}$       Column set in interleaver matrix used for RI, as defined in the 3GPP standard

$ColSet_{ACK}$        Column set in interleaver matrix used for ACK/NACK, as defined in the 3GPP standard

$Q'_{RI}$       Number of resource elements used for RI

$Q'_{ACK}$       Number of resource elements used for ACK/NACK

The scrambling algorithm fills the rows of the interleaver matrix (e.g., the interleaver matrix of Fig. 7) in an ascending order. The number of symbols used for ACK/NACK and RI information in the scrambling algorithm does not have to be a multiple of four. Therefore, not all columns include the same number of symbols and can differ by one symbol. Accordingly, the matrix P indicating which columns include one more symbol depending on the number of symbols modulo 4 is derived. Thus, by integrating the ACK/NACK and RI information insertion in the scrambling algorithm, the overall number of calculations can be reduced.

In the scrambling algorithm, a repetition code is included. In particular, in order to obtain the lengths $Q_{ACK}$ and $Q_{RI}$, the scrambling algorithm provides repetitions of the encoded sequence. $Q_{ACK}$ and $Q_{RI}$ are the number of bits used for transmission of ACK/NACK and RI, respectively. Therefore, data traffic for providing the ACK/NACK and RI information to the scrambling unit (e.g., scrambling unit 24 of Fig. 3) can be reduced.

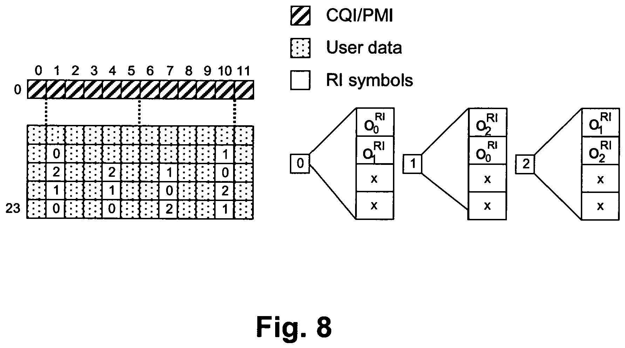

Fig. 8 shows a schematic block diagram of a second embodiment of an interleaver matrix. In this embodiment, insertion of RI information symbols in the positions reserved for RI information is shown. The insertion may be provided based on the above scrambling algorithm in the scrambling unit 24 of Fig. 3.

The embodiment is based on 2-bit RI, $Q'_{RI} = 14$ and $Q_M = 4$. In case that $k = 3Q_m$, the RI information symbols are filled in an ascending order from bottom to top starting with different offsets in the columns of the interleaver matrix. The offsets are included in offset vector b. Thus, insertion of RI information within the scrambling can be facilitated.

It is believed that many advantages of the present invention will be fully understood from the foregoing description, and it will be apparent that various changes may be made in the form, construction and arrangement of the exemplary aspects thereof without departing from the scope of the invention or without sacrificing all of its advantages. Because the invention can be varied in many ways, it will be recognized that the invention should be limited only by the scope of the following claims.

**Claims**

1. A method (400) for providing a Physical Uplink Shared Channel, PUSCH, bitstream comprising the steps of

   - obtaining (404) encoded user data;
   - interleaving (406) the encoded user data;
   - scrambling (408) the interleaved encoded user data; and
   - adding (410) Rank Indication information to the scrambled encoded user data,
   **characterized by** the steps of
   - determining, based on a recursive algorithm, bit positions within the encoded user data which have been reserved for the Rank Indication information;
   - calculating bit destination addresses of the obtained encoded user data, wherein the calculating of the bit destination addresses is only provided for bit positions within the encoded user data which have not been reserved for the Rank Indication information; and
   - storing (414) the interleaved encoded user data based on the calculated bit destination addresses in an output buffer, wherein
   - the interleaving comprises the step of reserving bit positions for the Rank Indication information.

2. The method of claim 1, further comprising the step of

   - considering a parameter relating to an amount of the Rank Indication information for the interleaving (406) of the encoded user data.

3. The method of one of the preceding claims, further comprising the steps of

   - obtaining (608) encoded control information; and
   - interleaving (610) the encoded control information after the interleaving (406) of the encoded user data.

4. The method of one of the preceding claims, further comprising the step of

   - rate-matching the obtained encoded user data.

5. The method of one of the preceding claims, further comprising the step of

   - repeatedly adding the Rank Indication information to the scrambled encoded user data.

6. The method of one of the preceding claims, further comprising the steps of

   - encoding the Rank Indication information;
   - adding (410) the encoded Rank Indication information to the scrambled encoded user data; and
   - post-processing the scrambled encoded user data.

7. A computer program product including program code portions for performing the method steps according to one of claims 1 to 6, when the computer program product is executed on one or more components of a computing device.

8. The computer program product according to claim 7, stored on a computer-readable recording medium.

9. An apparatus (18) for providing a Physical Uplink Shared Channel, PUSCH, bitstream comprising:

   - an interleaving unit (22) configured to interleave encoded user data; and
   - a scrambling unit (24) configured to scramble the interleaved encoded user data, wherein
   the scrambling unit (24) is configured to add Rank Indication information to the scrambled encoded user data,
   **characterized in that** the apparatus (18) is configured to
   - determine, based on a recursive algorithm, bit positions within the encoded user data which have been reserved for the Rank Indication information; and

- calculate bit destination addresses of the obtained encoded user data, wherein the calculating of the bit destination addresses is only provided for bit positions within the encoded user data which have not been reserved for the Rank Indication information, wherein the apparatus (18) further comprises
- an output buffer (28) configured to store the interleaved encoded user data based on the calculated bit destination addresses; and
- the interleaving unit (22) is configured to interleave the encoded user data based on bit positions that have been reserved for the Rank Indication information.

**10.** A baseband chipset comprising the apparatus (18) according to claim 9.

**11.** A mobile station (10) comprising the baseband chipset according to claim 10.

**Patentansprüche**

**1.** Verfahren (400) zur Bereitstellung eines PUSCH (gemeinsamer physikalischer Uplink-Kanal)-Bitstroms, umfassend die folgenden Schritte:

- Erhalten (404) von codierten Benutzerdaten;
- Verschachteln (406) der codierten Benutzerdaten;
- Verwürfeln (408) der verschachtelten codierten Benutzerdaten; und
- Hinzufügen (410) von Ranganzeigeinformationen zu den verwürfelten codierten Benutzerdaten,

**gekennzeichnet durch** die folgenden Schritte:

- Bestimmen von Bitpositionen innerhalb der codierten Benutzerdaten, die für die Ranganzeigeinformationen reserviert wurden, basierend auf einem rekursiven Algorithmus;
- Berechnen von Bitzieladressen der erhaltenen codierten Benutzerdaten, wobei das Berechnen der Bitzieladressen nur für Bitpositionen innerhalb der codierten Benutzerdaten bereitgestellt wird, die nicht für die Ranganzeigeinformationen reserviert wurden; und
- Speichern (414) der verschachtelten codierten Benutzerdaten basierend auf den berechneten Bitzieladressen in einem Ausgabepuffer, wobei
- das Verschachteln den Schritt des Reservierens von Bitpositionen für die Ranganzeigeinformationen umfasst.

**2.** Verfahren nach Anspruch 1, ferner umfassend den folgenden Schritt:

- Berücksichtigen eines Parameters in Bezug auf eine Menge der Ranganzeigeinformationen für das Verschachteln (406) der codierten Benutzerdaten.

**3.** Verfahren nach einem der vorhergehenden Ansprüche, ferner umfassend die folgenden Schritte:

- Erhalten (608) von codierten Steuerinformationen; und
- Verschachteln (610) der codierten Steuerinformationen nach dem Verschachteln (406) der codierten Benutzerdaten.

**4.** Verfahren nach einem der vorhergehenden Ansprüche, ferner umfassend den folgenden Schritt:

- Ratenanpassen der erhaltenen codierten Benutzerdaten.

**5.** Verfahren nach einem der vorhergehenden Ansprüche, ferner umfassend den folgenden Schritt:

- wiederholtes Hinzufügen der Ranganzeigeinformationen zu den verwürfelten codierten Benutzerdaten,

**6.** Verfahren nach einem der vorhergehenden Ansprüche, ferner umfassend die folgenden Schritte:

- Codieren der Ranganzeigeinformationen;
- Hinzufügen (410) der codierten Ranganzeigeinformationen zu den verwürfelten codierten Benutzerdaten, und
- Nachverarbeiten der verwürfelten codierten Benutzerdaten.

**7.** Computerprogrammprodukt, umfassend Programmcodeabschnitte zum Ausführen der Verfahrensschritte nach einem der Ansprüche 1 bis 6, wenn das Computerprogrammprodukt auf einer oder mehreren Komponenten einer Computervorrichtung ausgeführt wird.

**8.** Computerprogrammprodukt nach Anspruch 7, gespeichert auf einem computerlesbaren Aufzeichnungsmedium.

**9.** Vorrichtung (18) zum Bereitstellen eines PUSCH (gemeinsamer physikalischer Uplink-Kanal)-Bitstroms, umfassend:

- eine Verschachtelungseinheit (22), die zum Verschachteln von codierten Benutzerdaten konfiguriert ist; und
- eine Verwürfelungseinheit (24), die zum Verwürfeln der verschachtelten codierten Benutzerdaten konfiguriert ist, wobei die Verwürfelungseinheit (24) zum Hinzufügen von Ranganzeigeinformationen zu den verwürfelten codierten Benutzerdaten konfiguriert ist,

**dadurch gekennzeichnet, dass** die Vorrichtung (18) konfiguriert ist zum:

- Bestimmen von Bitpositionen innerhalb der codierten Benutzerdaten, die für die Ranganzeigeinformationen reserviert wurden, basierend auf einem rekursiven Algorithmus; und
- Berechnen von Bitzieladressen der erhaltenen codierten Benutzerdaten, wobei das Berechnen der Bitzieladressen nur für Bitpositionen innerhalb der codierten Benutzerdaten bereitgestellt wird, die nicht für die Ranganzeigeinformationen reserviert wurden; wobei die Vorrichtung (18) ferner umfasst:
- einen Ausgabepuffer (28), der zum Speichern der verschachtelten codierten Benutzerdaten basierend auf den berechneten Bitzieladressen konfiguriert ist; und
- wobei die Verschachtelungseinheit (22) so konfiguriert ist, dass sie die codierten Benutzerdaten basierend auf Bitpositionen verschachtelt, die für die Ranganzeigeinformationen reserviert wurden.

**10.** Basisband-Chipsatz, umfassend die Vorrichtung (18) nach Anspruch 9.

**11.** Mobilstation (10), umfassend den Basisband-Chipsatz nach Anspruch 10.

**Revendications**

**1.** Procédé (400) pour fournir un flux binaire de canal partagé de liaison montante physique, PUSCH, comprenant les étapes de :

- l'obtention (404) de données d'utilisateur codées ;
- l'entrelacement (406) des données d'utilisateur codées ;
- le brouillage (408) des données d'utilisateur codées entrelacées ; et
- l'ajout (410) d'informations d'indication de rang aux données d'utilisateur codées brouillées,
**caractérisé par** les étapes de
- la détermination, sur la base d'un algorithme récursif, de positions de bits à l'intérieur des données d'utilisateur codées qui ont été réservées pour les informations d'indication de rang ;
- le calcul d'adresses de destination de bits des données d'utilisateur codées obtenues, dans lequel le calcul des adresses de destination de bits est uniquement fourni pour des positions de bits à l'intérieur des données d'utilisateur codées qui n'ont pas été réservées pour les informations d'indication de rang; et
- la mémorisation (414) des données d'utilisateur codées entrelacées sur la base des adresses de destination de bits calculées dans une mémoire tampon de sortie, dans lequel
- l'entrelacement comprend l'étape de la réservation de positions de bits pour les informations d'indication de rang.

**2.** Procédé selon la revendication 1, comprenant en outre l'étape de :

- la prise en compte d'un paramètre relatif à une quantité d'informations d'indication de rang pour l'entrelacement (406) des données d'utilisateur codées.

**3.** Procédé selon l'une des revendications précédentes, comprenant en outre les étapes de :

- l'obtention (608) d'informations de commande codées ; et

- l'entrelacement (610) des informations de commande codée après l'entrelacement (406) des données d'utilisateur codées.

**4.** Procédé selon l'une des revendications précédentes, comprenant en outre l'étape de :

- l'appariement de débit des données d'utilisateur codées obtenues.

**5.** Procédé selon l'une des revendications précédentes, comprenant en outre l'étape de :

- l'ajout à répétition des informations d'indication de rang aux données d'utilisateur codées brouillées.

**6.** Procédé selon l'une des revendications précédentes, comprenant en outre les étapes de :

- le codage des informations d'indication de rang ;
- l'ajout (410) des informations d'indication de rang codées aux données d'utilisateur codées brouillées ; et
- le post-traitement des données d'utilisateur codées brouillées.

**7.** Produit de programme informatique incluant des portions de code de programme pour effectuer les étapes de procédé selon l'une des revendications 1 à 6, lorsque le produit de programme informatique est exécuté sur un ou plusieurs composants d'un dispositif informatique.

**8.** Produit de programme informatique selon la revendication 7, mémorisé sur un support d'enregistrement lisible par ordinateur.

**9.** Appareil (18) pour fournir un flux binaire de canal partagé de liaison montante physique, PUSCH, comprenant :

- une unité d'entrelacement (22) configurée pour l'entrelacement de données d'utilisateur codées ; et
- une unité de brouillage (24) configurée pour le brouillage des données d'utilisateur codées entrelacées, dans lequel
l'unité de brouillage (24) est configurée pour l'ajout d'informations d'indication de rang aux données d'utilisateur codées brouillées,
**caractérisé en ce que** l'appareil (18) est configuré pour
- la détermination, sur la base d'un algorithme récursif, de positions de bits à l'intérieur des données d'utilisateur codées qui ont été réservées pour les informations d'indication de rang; et
- le calcul d'adresses de destination de bits des données d'utilisateur codées obtenues, dans lequel le calcul des adresses de destination de bits est uniquement fourni pour des positions de bits à l'intérieur des données d'utilisateur codées qui n'ont pas été réservées pour les informations d'indication de rang, dans lequel l'appareil (18) comprend en outre
- une mémoire tampon de sortie (28) configurée pour la mémorisation des données d'utilisateur codées entrelacées sur la base des adresses de destination de bits calculées ; et
- l'unité d'entrelacement (22) est configurée pour l'entrelacement des données d'utilisateur codées sur la base de positions de bits qui ont été réservées pour les informations d'indication de rang.

**10.** Jeu de puces de bande de base comprenant l'appareil (18) selon la revendication 9.

**11.** Station mobile (10) comprenant le jeu de puces de bande de base selon la revendication 10.

**Fig. 1**

**Fig. 2**

18

20

Reserved RI →

22

ACK/NACK →

RI →

24

26

28

**Fig. 3**

400

RECEIVING AND
ENCODING USER DATA — 402

OBTAINING ENCODED USER DATA — 404

INTERLEAVING ENCODED
USER DATA — 406

SCRAMBLING INTERLEAVED
ENCODED USER DATA — 408

ADDING DOWNLINK FEEDBACK
INFORMATION TO THE
SCRAMBLED USER DATA — 410

PROCESSING SCRAMBLED
USER DATA — 412

PROVIDING PROCESSED USER DATA
TO OUTPUT BUFFER — 414

**Fig. 4**

**Fig. 5**

600

```
┌─────────────────────────────┐
│   RECEIVING, ENCODING AND RATE-│  ⌇ 602
│      MATCHING USER DATA       │
└─────────────────────────────┘
              │
              ▼
┌─────────────────────────────┐
│      STORING USER DATA IN    │  ⌇ 604
│  INTERMEDIATE CIRCULAR BUFFER │
└─────────────────────────────┘
              │
              ▼
┌─────────────────────────────┐
│    RECEIVING AND INTERLEAVING │
│         ENCODED AND          │  ⌇ 606
│     RATE-MATCHED USER DATA    │
└─────────────────────────────┘
              │
              ▼
┌─────────────────────────────┐
│      OBTAINING CONTROL DATA  │  ⌇ 608
└─────────────────────────────┘
              │
              ▼
┌─────────────────────────────┐
│   MULTIPLEXING AND INTERLEAVING│  ⌇ 610
│         CONTROL DATA          │
└─────────────────────────────┘
              │
              ▼
┌─────────────────────────────┐
│   WRITING INTERLEAVED AND    │  ⌇ 612
│ MULTIPLEXED CONTROL DATA INTO │
│         OUTPUT BUFFER         │
└─────────────────────────────┘
```

**Fig. 6**

Start

$N_{symb}^{PUSCH} = 12$

CQI/PMI

User data

RI reservation

Symbol

c

r

$R_{mux}$ -1

$Q'_{mux}(c)$

**Fig. 7**

Fig. 8

**EP 2 164 201 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008057843 A

**Non-patent literature cited in the description**

- Technical Specification Group Radio Access Network; Evolved Universal Terrestrial Radio Access (E-UTRA); Multiplexing and Channel Coding (Release 8). *3GPP TS 36.212 V8 6.0*

- Technical Specification Group Radio Access Network; Evolved Universal Terrestrial Radio Access (E-UTRA); Physical Channels and Modulation (Release 8). *3GPP TS 36.211 V8.6.0*
- *3GPP TS 36.212 V8 6.0*